Europäisches Patentamt

European Patent Office

Office européen des brevets

(19)

(11) Numéro de publication : **0 390 633 B1**

(12)

# FASCICULE DE BREVET EUROPEEN

(45) Date de publication du fascicule du brevet :
**23.12.92 Bulletin 92/52**

(51) Int. Cl.⁵ : **A23J 3/34,** A23C 9/152,
A23J 3/30

(21) Numéro de dépôt : **90400696.2**

(22) Date de dépôt : **15.03.90**

(54) **Hydrolysat partiel des protéines de lactosérum exempt de lactoglobulines et procédé enzymatique pour son obtention.**

(30) Priorité : **31.03.89 FR 8904239**

(43) Date de publication de la demande :
**03.10.90 Bulletin 90/40**

(45) Mention de la délivrance du brevet :
**23.12.92 Bulletin 92/52**

(84) Etats contractants désignés :
**AT BE CH DE DK ES FR GB GR IT LI LU NL SE**

(56) Documents cités :
**EP-A- 0 022 019**
**JOURNAL OF FOOD SCIENCE, vol. 53, no. 4,**
**1988, pages 1208-1211; J. ASSELIN et al.:**
**"Immunogenicity and allergenicity of whey-**
**protein hydrolysates"**

(73) Titulaire : **Union des Coopératives Laitières**
**d'ISIGNY-SUR-MER et de**
**SAINTE-MERE-EGLISE (Union de**
**Coopératives Agricoles)**
**2, rue du Docteur Boutrois**
**F-14230 Isigny-sur-Mer (FR)**

(72) Inventeur : **Thibault, Philippe André**
**20 Square de la Motte-Piquet**
**F-75015 Paris (FR)**

(74) Mandataire : **Colas, Jean-Pierre et al**
**Cabinet de Boisse 37, avenue Franklin D.**
**Roosevelt**
**F-75008 Paris (FR)**

## Description

L'invention concerne un hydrolysat partiel des protéines de lactosérum exempt de lactoglobulines et un procédé enzymatique pour son obtention.

Les aliments lactés diététiques pour nourrissons sont souvent fabriqués à partir de protéines extraites de lait bovin. Afin de se rapprocher du lait humain, une formulation particulière des différents ingrédients du lait bovin est nécessaire et du seul point de vue des protéines, on doit veiller à ce que l'amino-gramme (et en particulier l'apport d'acides aminés essentiels tels que la thréonine, le tryptophane et la lysine) soit le plus proche possible de celui des protéines du lait humain.

Pour cela il est nécessaire, en particulier de rééquilibrer le rapport protéines de sérum/caséines du lait bovin en faveur des protéines sériques. Les aliments lactés diététiques ainsi obtenus contiennent une forte proportion de protéines de lactosérum. Il se pose alors le problème suivant : les fractions protéiques des lactosérums humains et bovins n'ont pas la même composition ; en particulier, le lactosérum humain ne contient pas de bêta-lactoglobuline alors qu'environ la moitié de la fraction du lactosérum bovin est représenté par de la bêta-lactoglobuline. Cette différence de composition est à l'origine de phénomènes d'allergie chez certains nourrissons lorsque ceux-ci sont alimentés avec des laits de composition à base de protéines sériques d'origine bovine. Cette allergie se manifeste notamment par des troubles digestifs (douleurs abdominales, diarrhées, vomissements).

Plusieurs solutions ont été proposées pour remédier à ce problème, telles que, par exemple, la dénaturation thermique des protéines, l'hydrolyse totale des protéines en peptides très courts ou l'élimination quantitative des lactoglobulines.

La dénaturation thermique des protéines altère considérablement leur digestibilité.

L'hydrolyse totale voir par exemple EP-A- 0 022 019 des protéines est l'obtention de préparations ne contenant plus que des peptides et exemptes de protéines résiduelles. Cette hydrolyse peut être réalisée, soit par voie chimique (acide ou basique) soit par voie enzymatique. Dans le cas de l'hydrolyse enzymatique, il faut souvent utiliser plusieurs protéases de spécificités complémentaires (par exemple : trypsine, chymotrypsine, pepsine, papaïne, protéases bactériennes) pour atteindre le degré d'hydrolyse désiré ; les quantités d'enzymes à utiliser sont souvent importantes.

Que l'hydrolyse soit chimique ou enzymatique, il reste souvent dans les préparations des protéines résiduelles non digérées parce que particulièrement résistantes à l'hydrolyse (en particulier, sérum albumine et immunoglobulines). Si on désire ne récupérer que des peptides, ces protéines doivent être éliminées par un traitement supplémentaire (précipitation-centrifugation, ultra-filtration).

L'élimination quantitative des lactoglobulines peut être entreprise en exploitant le fait que les lactoglobulines sont encore solubles dans des conditions où toutes les autres protéines sériques majeures ne le sont pas. Un procédé a été ainsi proposé par KUWATA et Coll. (1985) dans J. Food Sci., V.50, N.3 ; pp 605-609, dans un article intitulé : "elimination of beta-lactoglobulin from whey to simulate human milk protein". On ajoute au lactosérum du chlorure ferrique et on ajuste le pH à 3. Toutes les protéines précipitent, à l'exception des lactoglobulines. On récupère le précipité puis on élimine les ions ferriques par échange d'ions ou par ultrafiltration. Le concentré protéique obtenu ne contient pas de lactoglobulines.

Ce procédé présente l'inconvénient d'altérer la digestibilité des protéines ainsi précipitées.

Les lactoglobulines représentent environ 50% des protéines sériques totales. Tous les procédés qui proposent l'élimination physique des lactoglobulines présentent donc l'inconvénient d'un rendement en protéines qui sera au maximum de 50%.

L'invention a pour objet de fournir un hydrolysat partiel des protéines de lactosérum qui est exempt de lactoglobulines et dans lequel les autres protéines sériques majeures, telles que la lactalbumine, la sérum albumine et les immunoglobulines, sont partiellement hydrolysées seulement de sorte qu'il subsiste des protéines sériques majeures entières dans ledit hydrolysat partiel, ce dernier présentant ainsi des propriétés allergéniques très réduites et se prêtant particulièrement bien à la formulation d'aliments lactés diététiques hypoallergéniques pour nourrissons, tels qu'un lait pour nourrissons.

Plus particulièrement, l'invention concerne un hydrolysat partiel des protéines de lactosérum caractérisé par :

i) l'absence de lactoglobulines,

ii) la présence de protéines sériques majeures entières,

iii) une concentration maximum en acides aminés libres de 5% exprimée en g d'azote sous forme d'acides aminés libres pour 100 g d'azote total, et

iv) le profil peptidique suivant:

| Masse molaire (MM) (g par mole) | Pourcentage pondéral (en g pour 100 g de matières azotées totales) |
|---|---|
| MM < 5 000 | 50 - 60% |
| 5 000 < MM < 50 000 | 30 - 40% |
| MM > 50 000 | 5 - 15% |

Comme défini ci-dessus, l'hydrolysat partiel de l'invention se caractérisé par

- l'absence de lactoglobulines qui sont la cause principale des allergies provoquées par les aliments lactés fabriqués à partir de protéines extraites du lait bovin ;

- la présence de protéines sériques majeures entières semblables à celles présentes dans le lait humain ;

- une concentration en acides aminés libres est limitée à un maximum de 5%, comme exprimée en g d'azote sous forme d'acides aminés pour 100 g d'azote total. Cette caractéristique présente l'avantage, par rapport à un taux d'acides aminés libres beaucoup plus élevé, de limiter la pression osmotique dans l'organisme et d'augmenter la faculté d'assimilation immédiate de la matière azotée ; et

- la présence d'une forte proportion de peptides de taille moyenne (MM < 5000). Cette caractéristique est importante du point de vue de la formulation d'aliments lactés à partir du produit de l'invention. En effet, de la matière grasse entre dans la composition du produit fini (généralement de l'ordre de 20% de la matière sèche) et celle-ci doit pouvoir se disperser facilement sans former une seconde phase lors de la reconstitution du lait par ajout d'eau. Pour cela, des composés émulsifiants doivent être présents dans la formulation ; les protéines de lactosérum, de taille moyenne, présentent un bon pouvoir émulsifiant et cette propriété disparaît lorsque le peptide est plus court. Il est donc intéressant de conserver dans l'hydrolysat une fraction peptidique de taille moyenne.

L'invention a également pour objet un procédé de préparation de l'hydrolysat partiel de l'invention.

Plus particulièrement l'invention concerne un procédé de préparation d'un hydrolysat partiel des protéines de lactosérum tel que défini plus haut, caractérisé en ce qu'il consiste à :

(i) hydrolyser partiellement des protéines contenues dans un substrat constitué d'un lactosérum, qui a été facultativement délipidé, et/ou déminéralisé et/ou concentré, ou d'une solution aqueuse de protéines extraites d'un tel lactosérum par mise en contact dudit substrat avec un enzyme choisi parmi la trypsine, la chymotrypsine et un mélange de celles-ci, dans les conditions opératoires suivantes :

- le rapport activité trypsique/protéines totales est compris dans la gamme de 5 000 à 20 000 unités BAEE pour 100 grammes de protéines totales et/ou le rapport activité chymotrypsique/protéines totales est compris dans la gamme de 20 000 à 300 000 unités ATEE pour 100 grammes de protéines totales ;

- le pH est compris dans la gamme de 8,5 à 9,0 lorsqu'on utilise de la trypsine seule, dans la gamme de 8,0 à 8,5 lorsqu'on utilise de la chymotrypsine seule, et dans la gamme de 8,0 à 9,0 lorsqu'on utilise un mélange de trypsine et de chymotrypsine ;

- la température de mise en contact est comprise entre 40 et 60°C ; et

(ii) à stopper l'hydrolyse enzymatique lorsque le substrat soumis à l'hydrolyse partielle présente :

- une absence de lactoglobulines ;

- une concentration maximale en acides aminés libres de 5%, exprimée en grammes d'azote sous forme d'acides aminés libres pour 100 g d'azote total, et

- le profil peptidique suivant:

| Masse molaire (MM) (g par mole) | Pourcentage pondéral (en g pour 100 g de matières azotées totales) |
|---|---|
| MM < 5 000 | 50 - 60% |
| 5 000 < MM < 50 000 | 30 - 40% |
| MM > 50 000 | 5 - 15% |

De préférence, on effectue l'hydrolyse partielle à une température de 45 à 50°C, inclusivement.

De préférence, également, lorsqu'on utilise un mélange de trypsine et de chymotrypsine, on opère à un pH situé dans la gamme de 8,0 à 8,5.

L'hydrolyse partielle peut être réalisée directement sur des lactosérums d'origines diverses : acides (pâtes fraîches, caséineries) ou doux (pâtes pressées). Ceux-ci peuvent être utilisés en l'état ou préalablement délipidés et/ou déminéralisés. On peut également adopter comme matière première d'hydrolyse, de tels lactosérums, concentrés (extrait sec aux environs de 20%, par exemple).

L'hydrolyse partielle peut être réalisée aussi sur des solutions aqueuses de protéines extraites des différents lactosérums précités. On peut obtenir ces protéines à l'état plus ou moins purifié par divers procédés connus : chromatographie par échange d'ions, filtration sur gel, précipitation, ultra-filtration. De toutes ces techniques, la plus appropriée car la plus économique et la plus employée industriellement est l'ultra-filtration. On obtient ainsi des préparations de protéines non dénaturées contenant 75 à 85% environ de matière protéique (par rapport à l'extrait sec). A partir de ces préparations de protéines purifiées (sèches ou hydratées), on prépare des solutions contenant environ 100 à 150 g de protéines par litre, que l'on soumet à l'hydrolyse partielle.

Les lactosérums ou les solutions de protéines reconstituées peuvent être utilisés en l'état ou préalablement clarifiés par centrifugation ou par microfiltration.

On veillera à la qualité microbiologique des matières premières ; en effet, certaines conditions opératoires de l'hydrolyse enzymatique (pH et température) sont favorables à des développements microbiens indésirables pour la qualité du produit fini. On pourra donc être amené à pratiquer, avant hydrolyse, sur la matière première, une opération de pasteurisation ou de stérilisation.

Pour réaliser l'hydrolyse partielle, on utilise soit de la trypsine, soit de la chymotrypsine, soit un mélange de ces deux protéases.

Les enzymes ci-dessus doivent être utilisés en quantités assurant un compromis entre une vitesse d'hydrolyse raisonnable et un coût acceptable du point de vue de l'économie du procédé à l'échelle industrielle.

A cette fin on adoptera un rapport activité chymotrypsique/protéines totales contenues dans le substrat compris entre 20.000 Unités ATEE et 300.000 Unités ATEE pour 100 grammes de protéines totales et/ou un rapport activité trypsique/protéines totales contenues dans la substrat compris entre 5000 Unités BAEE et 120.000 Unités BAEE pour 100 grammes de protéines totales.

Il est à noter que lorsqu'on emploie un mélange de trypsine et de chymotrypsine, il suffit qu'un seul des rapports activité enzymatique/protéines totales contenues dans le substrat soit compris dans la gamme indiquée, l'autre pouvant avoir, dans ce cas, une valeur inférieure au minimum indiqué.

Définition des Unités d'Activités Enzymatique :

- Activité trypsique : elle est déterminée à partir d'un système d'hydrolyse d'un substrat synthétique, le BAEE (N-benzoyl-L-arginine-éthyl ester). La trypsine hydrolyse le BAEE et libère des protons. A l'aide d'un tampon TRIS/HCl 50 mM pH 8,0, on prépare une solution 100 mM de BAEE et 20 mM de chlorure de calcium.

- Activité chymotrypsique : elle est déterminée à partir d'un système d'hydrolyse d'un autre substrat synthétique, l'ATEE (N-acétyl-L-tyrosine-éthyl ester). La chymotrypsine hydrolyse l'ATEE et libère des protons. La préparation peut être réalisée de la façon suivante : on dissout 135 mg d'ATEE dans 1 ml de méthanol, puis on ajoute 9 ml de tampon TRIS/HCl 50 mM pH 8,0 (ATEE : 50 mM).

Les préparations de substrat synthétique (BAEE pour la trypsine ou ATEE pour la chymotrypsine) sont placées à 30°C dans un pH-stat et après addition de l'enzyme, on mesure la quantité de base (soude ou potasse, par exemple) consommée pour maintenir le pH à 8,0.

Une Unité d'Activité Trysique est la quantité de trypsine qui catalyse l'hydrolyse d'une micro-mole de BAEE par minute dans les conditions de la mesure décrite ci-dessus.

Une Unité d'Activité Chymotrypsique est la quantité de chymotrypsine qui catalyse l'hydrolyse d'une micromole d'ATEE par minute dans les conditions de la mesure décrite ci-dessus.

Les protéases peuvent être utilisées en solution dans la préparation à hydrolyser ou bien immobilisées sur des supports insolubles.

Dans ce dernier cas, on pourra mettre en oeuvre une quelconque des méthodes connues d'immobilisation d'enzymes (par adsorption, par liens covalents) et n'importe quel support solide pourvu que celui-ci soit compatible avec l'application envisagée.

Il est préférable de choisir une méthode qui permette d'associer les enzymes au support par liaisons covalentes. Les composites obtenus présentent une meilleure stabilité.

On pourra utiliser des supports très divers, tels que des billes poreuses de silice ou d'alumine ou bien des rafles de maïs broyées et calibrées. Par exemple, on peut, dans un premier temps, greffer, sur de tels supports, des fonctions amines primaires :

a) à l'aide de silanes pour les supports siliceux ou à base d'alumine :

b) après un traitement d'oxydation (au métapériodate de sodium par exemple), en utilisant des préparations d'éthylènediamine, pour la rafle de maïs.

Dans un deuxième temps, on activera les fonctions greffées, par exemple, à l'aide de glutaraldéhyde.

Ensuite, l'addition des protéases seules ou en mélange (co-immobilisation) aux supports activés (rafles de maïs, silices, alumine) permettra d'obtenir des composites stables.

Mise en oeuvre de l'hydrolyse et contrôles analytiques :

Le pH de la matière première choisie (lactosérum ou solution de protéines purifiées) sera ajusté à une valeur compatible avec le bon fonctionnement des deux protéases. Celles-ci ont des pH optima d'activité légèrement différents : de 8 à 8,5 pour la chymotrypsine et de 8,5 à 9,0 pour la trypsine. Si les enzymes sont utilisés séparément, on prendra soin d'ajuster le pH du milieu réactionnel dans les gammes décrites ci-dessus.

Si les deux protéases sont utilisées en mélange, on choisira d'ajuster le pH dans une gamme comprise entre 7,5 et 9,0, de préférence entre 8,0 et 8,5.

Le pH sera ajusté à l'aide d'une base compatible avec les applications envisagées. On pourra généralement adopter la soude (hydroxyde de sodium), la potasse (hydroxyde de potassium), l'ammoniaque ou un mélange de ces bases afin d'équilibrer l'apport de cations.

La réaction d'hydrolyse sera mise en oeuvre dans un système où le pH et la température seront régulés.

Le pH sera maintenu à sa valeur de départ par addition de base.

La température de consigne sera telle qu'elle permettra d'obtenir des activités enzymatiques élevées (et donc de réduire le temps d'hydrolyse ou la quantité d'enzymes à utiliser), avec une stabilité convenable.

Une température relativement élevée permettra également de limiter ou d'éviter des développements microbiens.

La température sera comprise entre 40 et 60°C, de préférence entre 45 et 50°C.

On peut mettre en contact la matière première à traiter avec l'enzyme :

a) en solution agitée dans le réacteur dans le cas de préparations protéolytiques solubles ;

b) en lit agité modérément ou en recirculation sur un lit fixe dans le cas de préparations de protéases immobilisées.

La cinétique de la réaction sera essentiellement fonction de la température adoptée et du rapport enzymes/substrat choisi puis, dans une moindre mesure, du pH.

Dans un premier temps, afin de connaître le temps exact d'hydrolyse pour des conditions opératoires bien définies et pour contrôler l'hydrolysat en fin de traitement, on pratique une analyse du profil protéique par chromatographie en filtration sur gel.

Pour cela on met en oeuvre avantageusement la F.P.L.C. (Fast Protein Liquid Chromatography) en utilisant, par exemple, des colonnes garnies de Superose 6 ou de Superose 12 (Pharmacia). Les analyses seront effectuées en milieu acide (tampon citrate ou présence d'acide acétique ou d'acide formique) afin d'éviter le phénomène de condensation des peptides en milieu neutre qui est à l'origine d'une surestimation de la taille des peptides. Un pH maximum de 3,0 est requis. L'analyse des fractions éluées peut être réalisée par mesure de la densité optique à 280 nm.

Ainsi, pour des conditions opératoires bien déterminées et bien contrôlées, une série d'analyses consécutives des profils protéiques permet de connaître le temps d'hydrolyse nécessaire pour atteindre le degré d'hydrolyse désiré.

A ce degré d'hydrolyse correspond une quantité propre de base consommée et, par la suite, il sera utile et plus pratique de conduire l'hydrolyse jusqu'à concurrence de cette quantité donnée de base.

La chromatographie n'interviendra alors qu'en fin d'hydrolyse pour contrôler le profil peptidique de l'hydrolysat.

. Si les enzymes sont utilisés à l'état soluble, lorsque le degré d'hydrolyse souhaité est atteint, il est nécessaire d'arrêter la réaction. Pour cela, on pourra acidifier le milieu (pH $\leqq$ 6,0) et amener la température à une valeur inférieure à 20°C.

. Si les enzymes sont utilisés à l'état immobilisé, lorsque le degré d'hydrolyse désiré est atteint, le composite d'enzymes immobilisés est séparé de la préparation hydrolysée.

Dans le cas d'une procédure discontinue à lit fixe, la séparation est aisée ; dans le cas d'une procédure discontinue en lit agité, le mode de séparation sera fonction du type de support. On procède généralement par simple décantation ou par centrifugation.

Dans le cas d'une procédure continue, c'est le temps qui détermine le degré d'hydrolyse et le problème de la séparation catalyseur/hydrolysat ne se pose pas.

L'hydrolysat ainsi obtenu représente le produit de l'invention.

Les exemples non limitatifs suivants sont donnés en vue d'illustrer l'invention.

Les exemples 1 à 5 illustrent les cinétiques obtenues avec la trypsine et la chymotrypsine utilisées séparément puis en mélange dans deux proportions différentes, sur des protéines de lactosérum purifiées.

Les exemples 6 et 7 illustrent l'application du procédé à différents types de lactosérums.

L'exemple 8 illustre la mise en oeuvre du procédé à l'aide d'enzymes immobilisés.

## EXEMPLE 1

A partir d'une poudre de protéines de lactosérum purifiées par ultra-filtration à 75% en poids de protéines, on prépare une solution aqueuse à 10% d'extrait sec (soit 7,5% de protéines).

Le pH de la solution est ajusté à 8,0 à l'aide de soude.

La solution est portée à 50°C dans un réacteur disposant d'une régulation de pH.

On ajoute de la trypsine à raison de 50.000 Unités BAEE pour 100 grammes de protéines mises en oeuvre.

Après ajout de l'enzyme, le pH est maintenu à 8,0 par addition de soude.

Après 2 heures d'hydrolyse, pour arrêter la réaction, le pH est ajusté à 6,0 à l'aide d'acide chlorhydrique et la température est ramenée à 20°C.

L'hydrolysat ainsi obtenu constitue un produit de l'invention.

## EXEMPLE 2

A partir d'une poudre de protéines de lactosérum purifiées par ultra-filtration à 75% en poids de protéines, on prépare une solution aqueuse à 10% d'extrait sec (soit 7,5% de protéines).

Le pH de la solution est ajusté à 8,0 à l'aide de soude.

La solution est portée à 50°C dans un réacteur disposant d'une régulation de pH.

On ajoute de la chymotrypsine à raison de 300.000 Unités ATEE pour 100 grammes de protéines mises en oeuvre.

Après ajout de l'enzyme, le pH est maintenu à 8,0 par addition de soude.

Après 3 heures d'hydrolyse, pour arrêter la réaction, le pH est ajusté à 6,0 à l'aide d'acide chlorhydrique et la température est ramenée à 20°C.

L'hydrolysat ainsi obtenu constitue un produit de l'invention.

## EXEMPLE 3

A partir d'une poudre de protéines de lactosérum purifiées par ultra-filtration à 75% en poids de protéines, on prépare une solution aqueuse à 10% d'extrait sec (soit 7,5% de protéines).

Le pH de la solution est ajusté à 8,0 à l'aide de soude.

La solution est portée à 50°C dans un réacteur disposant d'une régulation de pH.

On prépare un mélange de trypsine et de chymotrypsine de façon à offrir 200.000 Unités ATEE de chymotrypsine et 12.000 Unités BAEE de trypsine pour 100 grammes de protéines mises en oeuvre.

Après ajout de l'enzyme, le pH est maintenu à 8,0 par addition de soude.

Après 1,5 heure d'hydrolyse, pour arrêter la réaction, le pH est ajusté à 6,0 à l'aide d'acide chlorhydrique et la température est ramenée à 20°C.

L'hydrolysat ainsi obtenu constitue un produit de l'invention.

EXEMPLE 4

A partir d'une poudre de protéines de lactosérum purifiées par ultra-filtration 75% en poids de protéines, on prépare une solution aqueuse à 10% d'extrait sec (soit 7,5% de protéines).

Le pH de la solution est ajusté à 8,0 à l'aide de soude.

La solution est portée à 50°C dans un réacteur disposant d'une régulation de pH.

On prépare un mélange de trypsine et de chymotrypsine de façon à offrir 35.000 Unités BAEE de trypsine et 70.000 unités ATEE de chymotrypsine pour 100 grammes de protéines mises en oeuvre.

Après ajout de l'enzyme, le pH est maintenu à 8,0 par addition de soude.

Après 1 heure d'hydrolyse, pour arrêter la réaction, le pH est ajusté à 6,0 à l'aide d'acide chlorhydrique et la température est ramenée à 20°C.

L'hydrolysat ainsi obtenu constitue un produit de l'invention.

EXEMPLE 5

A partir d'une poudre de protéines de lactosérum purifiées par ultra-filtration à 75% en poids de protéines, on prépare une solution aqueuse à 10% d'extrait sec (soit 7,5% de protéines).

Le pH de la solution est ajusté à 8,0 à l'aide de soude.

La solution est portée à 50°C dans un réacteur disposant d'une régulation de pH.

On prépare un mélange de trypsine et de chymotrypsine de façon à offrir 20.000 Unités ATEE de chymotrypsine et 10.000 Unités BAEE de trypsine pour 100 grammes de protéines mises en oeuvre.

Après ajout de l'enzyme, le pH est maintenu à 8,0 par addition de soude.

Après 5 heures d'hydrolyse, pour arrêter la réaction, le pH est ajusté à 6,0 à l'aide d'acide chlorhydrique et la température est ramenée à 20°C.

L'hydrolysat ainsi obtenu constitue un produit de l'invention.

EXEMPLE 6

La matière première d'hydrolyse est un lactosérum de pâte pressée concentré par osmose inverse à 22,6% d'extrait sec. Son pH initial est 6,3 et sa matière azotée totale représente 14,6% de l'extrait sec.

Le pH est ajusté à 8,0 à l'aide de soude, puis celui-ci est placé à 50°C dans un réacteur muni d'un système de régulation de pH.

On prépare un mélange de trypsine et de chymotrypsine de façon à offrir 35.000 unités BAEE de trypsine et 70.000 Unités ATEE de chymotrypsine pour 100 grammes de protéines mises en oeuvre.

Après ajout du mélange protéasique, le pH est maintenu à 8,0 par addition de soude.

Après 1 heure d'hydrolyse, la réaction est arrêtée en ajustant le pH à 6,0 et en ramenant la température à 20°C.

Le profil protéique du produit obtenu correspond à un produit de l'invention.

EXEMPLE 7

La matière première d'hydrolyse est un lactosérum de pâte pressée déminéralisé par électrodialyse et concentré par osmose inverse. Ses principales caractéristiques sont les suivantes :
- Extrait sec : 21,3%
- Matière Azotée Totale : 15,4% de l'extrait sec
- Cendres : 0,9% de l'extrait sec
- pH initial : 5,0.

Le pH est ajusté à 8,0 à l'aide de soude, puis le lactosérum est placé à 50°C dans un réacteur muni d'une régulation de pH.

On prépare un mélange de trypsine et de chymotrypsine de façon à offrir 35.000 Unités BAEE de trypsine et 70.000 Unités ATEE de chymotrypsine pour 100 grammes de protéines mises en oeuvre.

Après ajout du mélange protéasique, le pH est maintenu à 8,0 à l'aide de soude.

Après 1 heure d'hydrolyse, la réaction est arrêtée en ajustant le pH à 6 et en ramenant la température à 20°C.

Le profil protéique du produit obtenu correspond à un produit de l'invention.

EXEMPLE 8

On prépare un composite de protéases immobilisées par liaisons covalentes à un support minéral de la façon suivante :

* Support : ce sont des billes de silice poreuse dont le diamètre moyen est 450 micromètres. Le diamètre moyen des pores est 35 nanomètres et la surface spécifique moyenne est 35 m² par gramme.
* On greffe des fonctions amines primaires à ce support selon le protocole suivant :
    - mise en contact de 1 gramme de support sec avec 100 ml d'une solution à 0,5% de gamma-amino-propyl-triéthoxysilane dont le pH a été ajusté à 4,5 par addition d'acide acétique.
    - Agitation 1 heure à 70°C.
    - Rinçages abondants à l'eau.
* Le support (1 gramme) est ensuite activé pendant 2 heures à 20°C à l'aide d'une solution aqueuse de glutaraldéhyde à 2,5% (100 ml), puis rincé abondamment.
* Dans 100 ml de tampon phosphate 50 mM, pH 7,0, on prépare un mélange à 3.500 Unités BAEE de trypsine et 7.000 Unités ATEE de chymotrypsine que l'on met en contact avec 1 gramme de support activé, à 4°C pendant 16 heures.
* Après rinçage du support, on effectue à 20°C, pendant 2 heures, une réticulation des protéases immobilisées à l'aide de 100 ml d'une solution aqueuse de glutaraldéhyde à 2,5% pour 1 gramme de support.
* Les protéases seulement adsorbées sont ensuite éliminées par trois lavages de 15 mn à l'aide d'une solution molaire de chlorure de sodium (100 ml pour 1 gramme de support, soit au total 300 ml). Cette opération s'effectue à 20°C et est suivie d'un rinçage abondant.

Les rendements d'immobilisation obtenus sont de l'ordre de 10% si bien que le composite résultant présente une activité trysique d'environ 350 unités BAEE/g de support sec et une activité chymotrypsique d'environ 700 unités ATEE/g de support sec.

La réaction d'hydrolyse est mise en oeuvre de la façon suivante :

* Matière première : lactosérum de pâte pressée concentré à 22,6% d'extrait sec par osmose inverse. Son pH initial est 6,3 et sa matière azotée totale représente 14,6% de l'extrait sec.
* Hydrolyse : le pH du lactosérum est ajusté à 8,0 à l'aide de soude puis on met en contact 50g de composite de protéases immobilisées avec 500 g de lactosérum (soit environ 106 000 unités BAEE et environ 212 000 unités ATEE pour 100 g de protéines totales), à 40°C sous agitation lente afin de maintenir le composite en suspension dans le lactosérum.

Le pH est régulé à 8,0 par addition de soude.

Après 15 heures d'hydrolyse, le composite est séparé du lactosérum par décantation.

Le profil protéique du lactosérum obtenu correspond à un produit de l'invention.

**Revendications**

1. Un hydrolysat partiel des protéines de lactosérum caractérisé par :
    i) l'absence de lactoglobulines,
    ii) la présence de protéines sériques majeures entières,
    iii) une concentration maximum acides aminés libres de 5% exprimée en g d'azote sous forme d'acides aminés libres pour 100 g d'azote total, et
    iv) le profil peptidique suivant :

| Masse molaire (MM) (g par mole) | Pourcentage pondéral (en g pour 100 g de matières azotées totales) |
|---|---|
| MM < 5 000 | 50 - 60% |
| 5 000 < MM < 50 000 | 30 - 40% |
| MM > 50 000 | 5 - 15%. |

2. Un procédé de préparation d'un hydrolysat partiel des protéines de lactosérum tel que défini à la revendication 1, caractérisé en ce qu'il consiste à :

(i) hydrolyser partiellement des protéines contenues dans un substrat constitué d'un lactosérum, qui a été facultativement délipidé, et/ou déminéralisé et/ou concentré, ou d'une solution aqueuse de protéines extraites d'un tel lactosérum par mise en contact dudit substrat avec un enzyme choisi parmi la trypsine, la chymotrypsine et un mélange de celles-ci, dans les conditions opératoires suivantes :

- le rapport activité trypsique/protéines totales est compris dans la gamme de 5 000 à 120 000 unités BAEE pour 100 grammes de protéines totales et/ou le rapport activité chymotrypsique/protéines totales est compris dans la gamme de 20 000 à 300 000 unités ATEE pour 100 grammes de protéines totales ;

- le pH est compris dans la gamme de 8,5 à 9,0 lorsqu'on utilise de la trypsine seule, dans la gamme de 8,0 à 8,5 lorsqu'on utilise de la chymotrypsine seule, et dans la gamme de 7,5 à 9,0 lorsqu'on utilise un mélange de trypsine et de chymotrypsine ;

- la température de mise en contact est comprise entre 40 et 60°C ; et

(ii) à stopper l'hydrolyse enzymatique lorsque le substrat soumis à l'hydrolyse partielle présente :

- une absence de lactoglobulines;

- une concentration maximale en acides aminés libres de 5%, exprimée en grammes d'azote sous forme d'acides aminés libres pour 100 g d'azote total, et

- le profil peptidique suivant :

```
Masse molaire (MM)              Pourcentage pondéral
   (g par mole)                 (en g pour 100 g de
       .                         matières azotées totales)
-------------------------------------------------------------
       MM <   5 000                   50 - 60%
5 000 < MM <  50 000                  30 - 40%
       MM >  50 000                    5 - 15%   .
```

3. Un procédé selon la revendication 2, caractérisé en ce qu'on effectue l'hydrolyse partielle à une température de 45 à 50°C inclusivement.

4. Un procédé selon la revendication 2, caractérisé en ce qu'on utilise un mélange de trypsine et de chymotrypsine et en ce que le pH est dans la gamme de 8,0 à 8,5.

5. Aliments lactés diététiques hypoallergéniques, caractérisés en ce qu'ils contiennent un hydrolysat partiel tel que défini à la revendication 1.


**Patentansprüche**

1. Teilhydrolysat aus Molkeproteinen, gekennzeichnet durch:

i) das Fehlen von Lactoglobulin,

ii) das Vorhandensein unverletzer Molkehauptproteine,

iii) eine Höchstkonzentration an freien Aminosäuren von 5%, angegeben in g Stickstoff in Form von freien Aminosäuren pro 100 g Gesamtstickstoff und

iv) das folgendes Peptidprofil :

|   | molare Masse (MM)<br>(g pro mol) | Gewichtsprozent<br>( in g pro 100 g<br>Gesamt stickstoffhaltiger Stoffe ) |
|---|---|---|
| | MM < 5 000 | 50 - 60% |
| 5 000 < | MM < 50 000 | 30 - 40% |
| | MM > 50 000 | 5 - 15% |

**2.** Verfahren zur Herstellung eines Teilhydrolysats aus Molkeproteinen, wie in Anspruch 1 beschrieben, dadurch gekennzeichnet, daß es darin besteht:

i) Proteine, die in einem Substrat enthalten sind, das aus Molke, die wahlweise entfettet, und/oder entmineralisiert, und/oder konzentriert wurde, oder aus einer wäßrigen Lösung von Proteinen, die aus einer derartigen Molke extrahiert wurden, gebildet ist, durch Kontaktieren dieses Substrats mit einem Enzym, entweder Trypsin, Chymotrypsin oder einer Mischung dieser beiden, unter folgenden Versuchsbedingungen teilweise zu hydrolysieren:

- das Verhältnis der Trypsinaktivität/Gesamtprotein liegt im Bereich von 5 000 bis 120 000 Einheiten BAEE pro 100 g Gesamtprotein und/oder das Verhältnis der Chymotrypsinaktivität/Gesamtprotein liegt im Bereich von 20 000 bis 300 000 Einheiten ATEE pro 100 g Gesamtprotein;
- der pH-Wert liegt im Bereich von 8,5 bis 9,0 wenn man Trypsin allein verwendet, im Bereich von 8,0 bis 8,5 wenn man Chymotrypsin allein verwendet und im Bereich von 7,5 bis 9,0 wenn man eine Mischung aus Trypsin und Chymotrypsin verwendet;
- die Kontaktiertemperatur liegt zwischen 40 und 60°C; und

ii) die enzymatische Hydrolyse zu stoppen, wenn das der Teilhydrolyse unterzogene Substrat
- das Fehlen von Lactoglobulin,
- eine Höchstkonzentration an freien Aminosäuren von 5%, angegeben in g Stickstoff in Form von freien Aminosäuren pro 100 g Gesamtstickstoff und
- folgendes Peptidprofil aufweist:

|   | molare Masse (MM)<br>(g pro mol) | Gewichtsprozent<br>( in g pro 100 g<br>Gesamt stickstoffhaltiger Stoffe ) |
|---|---|---|
| | MM < 5 000 | 50 - 60% |
| 5 000 < | MM < 50 000 | 30 - 40% |
| | MM > 50 000 | 5 - 15% |

**3.** Verfahren nach Anspruch 2, dadurch gekennzeichnet, daß die Teilhydrolyse bei einer Temperatur von 45 bis einschließlich 50°C durchgeführt wird.

**4.** Verfahren nach Anspruch 2, dadurch gekennzeichnet, daß eine Mischung von Trypsin und Chymotrypsin verwendet wird und daß der pH-Wert im Bereich von 8,0 bis 8,5 liegt.

**5.** Hypoallergene Diätnahrungsmittel aus Milch, dadurch gekennzeichnet, daß sie ein Teilhydrolysat, wie in Anspruch 1 beschrieben, enthalten.

**Claims**

**1.** A partial hydrolysate of whey proteins characterised by:
i) the absence of lactoglobulins,

ii) the presence of intact major whey proteins,
iii) a maximum free amino acid concentration of 5% expressed as g of nitrogen in the form of free amino acids per 100 g of total nitrogen, and
iv) the following peptide profile:

| Molar mass (MM) (g per mole) | Percentage by weight (as g per 100 g of total nitrogen-containing material) |
|---|---|
| MM < 5,000 | 50 - 60% |
| 5,000 < MM < 50,000 | 30 - 40% |
| MM < 50,000 | 5 - 15% |

2. A method for preparing a partial hydrolysate of whey proteins according to claim 1 characterised in that it consists of:

    i) partial hydrolysis of the proteins contained in a substrate consisting of whey which has been optionally delipidised and/or demineralised and/or concentrated, or an aqueous solution of proteins extracted from such a whey, by contacting the said substrate with an enzyme selected from trypsin, chymotrypsin and a mixture of these two under the following operating conditions:

        - the trypsin/total proteins activity ratio lies in the range from 5,000 to 120,000 BAEE units per 100 grams of total proteins and/or the chymotrypsin/total proteins activity ratio lies within the range from 20,000 to 300,000 ATEE units per 100 grams of total protein,

        - the pH lies in the range between 8.5 and 9.0 when trypsin is used alone, in the range from 8.0 to 8.5 when chymotrypsin is used alone, and in the range from 7.5 to 9.0 when a mixture of trypsin and chymotrypsin is used,

        - the contact temperature lies between 40 and 60°C, and

    (ii) the enzyme hydrolysis is stopped when a substrate subjected to partial hydrolysis shows:

        - that lactoglobulins are absent,

        - a maximum free amino acid concentration of 5%, expressed as grams of nitrogen in the form of free amino acids per 100 g of total nitrogen, and

        - the following peptide profile:

| Molar mass (MM) (g per mole) | Percentage by weight (as g per 100 g of total nitrogen-containing material) |
|---|---|
| MM < 5,000 | 50 - 60% |
| 5,000 < MM < 50,000 | 30 - 40% |
| MM < 50,000 | 5 - 15% |

3. A method according to claim 2, characterised in that the partial hydrolysis is performed at a temperature between 45 and 50°C inclusive.

4. A method according to claim 2, characterised in that a mixture of trypsin and chymotrypsin is used and in that the pH is in the range from 8.0 to 8.5.

5. Hypoallergenic dietetic milk-based foodstuffs characterised in that they contain a partial hydrolysate as defined in claim 1.